# EUROPEAN PATENT SPECIFICATION

(11) **EP 1 023 623 B1**
(45) Date of publication and mention of the grant of the patent: **20.07.2011**
(21) Application number: 98903774.2
(22) Date of filing: 09.02.1998
(51) Int. Cl.: G01Q 60/18

(54) **Cantilevered glass structures for nanodelivery of chemicals**
Cantilever in Glas zur Abgabe von Nanomengen von Chemikalien
Cantilever en verre pour la nanodistribution de produits chimiques

(30) Priority: 09.02.1997 IL 12018197
(43) Date of publication of application: 02.08.2000
(73) Proprietor: Nanoptics, Inc., Jerusalem 91904 (IL)
(72) Inventor: LEWIS, Aaron, 93708 Jerusalem (IL); FISH, Galina, 90916 Ishuv Nokdim (IL); KOKOTOV, Sophia, 98450 Maale Adumim (IL); KHACHAIRYAN, Edward, 96750 Jerusalem (IL); IGNATOV, Andrey, 96141 Jerusalem (IL); GLAZER, Rimma, Jerusalem (IL); KOMISSAR, Anatoly, 96784 Jerusalem (IL); HEIFEZ, Yuri, 96507 Jerusalem (IL); STRINKOVSKY, Alina, 99032 Beit Shemesh (IL); LIEBERMAN, Klony, Jerusalem (IL)
(74) Representative: Fuhlendorf, Jörn
(86) International application number: PCT/US1998/001577
(87) International publication number: WO 1998/037440

(56) References cited:
- EP-A- 0 487 233
- EP-A- 0 545 538
- WO-A-95/05000
- US-A- 4 743 548
- US-A- 4 877 300
- US-A- 4 915 467
- US-A- 5 015 843
- US-A- 5 044 716
- US-A- 5 137 352
- BETZIG E ET AL: "COMBINED SHEAR FORCE AND NEAR-FIELD SCANNING OPTICAL MICROSCOPY" APPLIED PHYSICS LETTERS,US,AMERICAN INSTITUTE OF PHYSICS. NEW YORK, vol. 60, no. 20, 18 May 1992 (1992-05-18), pages 2484-2486, XP000269813 ISSN: 0003-6951
- VALASKOVIC G A ET AL: "PARAMETER CONTROL, CHARACTERIZATION, AND OPTIMIZATION IN THE FABRICATION OF OPTICAL FIBER NEAR-FIELD PROBES" APPLIED OPTICS,US,OPTICAL SOCIETY OF AMERICA,WASHINGTON, vol. 34, no. 7, 1 March 1995 (1995-03-01), pages 1215-1228, XP000490715 ISSN: 0003-6935
- ZEISEL D ET AL: "PULSED LASER-INDUCED DESORPTION AND OPTICAL IMAGING ON A NAOMETER SCALE WITH SCANNING NEAR-FIELD MICROSCOPY USING CHEMICALLY ETCHED FIBER TIPS" APPLIED PHYSICS LETTERS,US,AMERICAN INSTITUTE OF PHYSICS. NEW YORK, vol. 68, no. 18, 29 April 1996 (1996-04-29), pages 2491-2492, XP000676282 ISSN: 0003-6951
- SMITH N V ET AL: "CHANNELING OF VACUUM ULTRAVIOLET RADIATION DOWN TAPERED CAPILLARIES AND PROSPECTS FOR A PHOTOEMISSION SPECTROMICROSCOPY" REVIEW OF SCIENTIFIC INSTRUMENTS,US,AMERICAN INSTITUTE OF PHYSICS. NEW YORK, vol. 65, no. 6, 1 June 1994 (1994-06-01), pages 1954-1958, XP000459618 ISSN: 0034-6748
- MCCULLOCH S ET AL: "A SIMPLE REPRODUCIBLE TECHNIQUE FOR PRODUCING SUB-MICROMETRE FIBRE-OPTIC PROBES FOR NEAR-FIELD OPTICAL MICROSCOPY AND CHEMICAL SENSORS" MEASUREMENT SCIENCE AND TECHNOLOGY,GB,IOP PUBLISHING, BRISTOL, vol. 6, no. 8, 1 August 1995 (1995-08-01), pages 1157-1162, XP000525068 ISSN: 0957-0233
- PROKSCH R ET AL: "IMAGING THE INTERNAL AND EXTERNAL PORE STRUCTURE OF MEMBRANES IN FLUID: TAPPING MODE SCANNING ION CONDUCTANCE MICROSCOPY" BIOPHYSICAL JOURNAL,NEW YORK, US,US, vol. 71, no. 4, October 1996 (1996-10), pages 2155-2157, XP000961352 ISSN: 0006-3495
- LIEBERMAN K ET AL: "A FULLY INTEGRATED NEAR-FIELD OPTICAL, FAR-FIELD OPTICAL, AND NORMAL-FORCE SCANNED PROBE MICROSCOPE" REVIEW OF SCIENTIFIC INSTRUMENTS,US,AMERICAN INSTITUTE OF PHYSICS. NEW YORK, vol. 67, no. 10, 1 October 1996 (1996-10-01), pages 3567-3572, XP000635812 ISSN: 0034-6748

## Description

### 1. Field of the Invention

This invention allows the use of tapered cantilevered structures that are optimized for the maximal nanodelivery of chemicals. These structures are generated so that they can simultaneously act as force sensors with excellent dynamic characteristics. Unlike previous attempts at obtaining such elements with chemical etching techniques our methodology is based solely on the application of glass pulling technologies with specific protocols that can minimize the subwavelength travel of light waves and can maximize the dynamic capabilities of these devices. Unlike the glass etching techniques these glass pulling technologies are universally applicable to glass micropipettes and fibers. Optimal geometries of force sensing glass micropipettes are invented for the optimal delivery of chemicals in nanoquantities in a defined and in a nanometrically controlled fashion.

### 2. Background of the Invention

This invention is based on advances in near-field optics.

Near-field optics is the development of optical elements that can work in the near-field of an object that is to be interrogated by light.

In essence, the objective is to develop optical elements that can illuminate, detect and/or enhance optical phenomena within a distance, from the object, that is considerably less than the dimensions of one wavelength. Conventional optical instruments all of which work in the far-field are based on lenses which critically depend on the wave nature of light. Thus, these elements are inherently limited to operation in the far-field with associated problems of diffraction that intrinsically limits resolution to approximately half the wavelength of light. Near-field optical elements not only overcome this diffraction limit of resolution but also relax the wavelength dependence of optical resolution. In its simplest implementation [A. Lewis, M. Isaacson, A. Hartoonian and A. Murray, Biophysical J. 41, 405a (1983); Ultramicroscopy 13, 227 (1984)] near-field optics involves transmitting light through a subwavelength aperture that is brought in close proximity to a surface. The sample or the aperture is then scanned in order to obtain an image or create a pattern with the subwavelength spot of light that emanates from this near-field optical element.

### 3. State of Prior Art

The method of choice that is used throughout the world today to produce near-field optical elements was developed by Lewis et al. [United States Patent Number 4,917,462]. The essence of the methodology of Lewis et al was to use heating, tension and pulling with microprocessor control to produce tapered glass structures that were subsequently coated with metal to form a subwavelength aperture. This was a simple, cheap and reliable method of producing these subwavelength optical elements. Nonetheless, these elements were produced without much regard to the geometry of the subwavelength tip in terms of reducing the subwavelength region through which the light wave traversed. It is important to realize that the technology in the Lewis et al patent was a general methodology for producing these subwavelength tips through which subwavelength points of light could be produced. This generality can be seen by the fact that the same technology could be used to produce tapered optical elements made out of glass capillaries [A. Harootunian, E. Betzig, M. S. Isaacson and A. Lewis, Appl. Phys. Lett. 49, 674 (1986)] or glass fibers [Betzig E., Trautman J. K., Harris T. D., Weiner J. S. and Kostelak R. L., Science 251, 1468 (1991)]. All of these structures, however, had less than optimized geometries at the tip and thus there were significant evanescent losses that resulted from the transmission of the electromagnetic radiation through the tip.

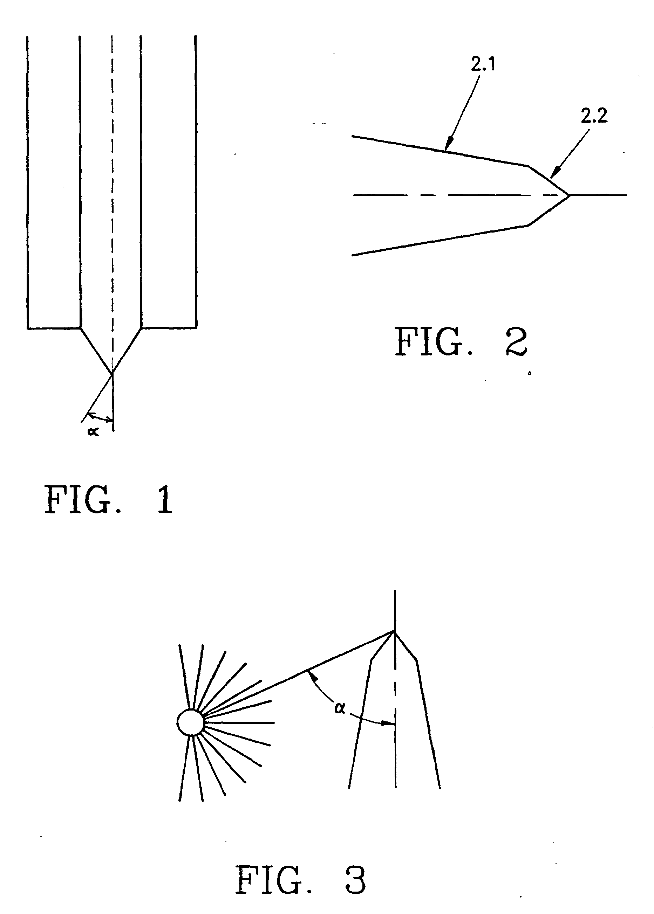

The first attempts at resolving this problem were made by workers who realized that geometries at the tip that were closer to what would be optimal for high transmission of the light wave through the subwavelength region could be approached with chemical etching of glass fibers [Ohtsu, M., S. Juang, T. Pangaribuan and M. Kozuma, Proceesing of NFO-1, 131-139 (1993); Jiang, S., Ohsawa, H., Yamada, K., Pangaribuan, T., Ohtsu, M., Imai, K., and Ikai, A., Jpn. J. Appl. Phys. 31, 2282 (1992)] without any previous tapering. Such structures had the potential to generate high throughputs if the coating of these structures could be effectively performed. The coating, however, was problematic since the etching technology resulted in damaged surfaces that were difficult to impossible to coat successfully. In addition, the angle required for coating such an etched structure was not compatible with the geometry of such untapered etched fibers. Furthermore, the geometry of such untapered elements (see Figure 1) perturbed significantly the ability of such elements to track rough surfaces. Finally, the untapered nature of these elements made the glass leading to the subwavelength tip very stiff and this crucially reduced the ability of such tips to monitor surface forces. It was this sensitivity of the tapered tips to surface forces [Shalom S., Lieberman K. Lewis A. and Cohen S. R., Rev. Sci. Instrm. 63, 4061 (1992)] that allowed the resolution of one of the principle problems of near-field optics which was the ability to bring such a subwavelength tip close to a surface that was to be interrogated. Also none of the etching methodologies could be applied to tapered micropipette structures whereas the pulling technology is applicable to both tapered micropipettes and optical fibers.

In view of all of these factors it would be best if the standard tapering methodology could be extended to produce a high throughput tip that would also be capable of effectively sensing surface forces.

WO 95/05000 discloses a cantilevered micropipette having a tip with a hole and a structure suitable for normal force sensing. EP 0 545 538 A1 discloses a shear force probe in the form of an optical fibre.

### 4. Summary of the Invention

The invention relates to the use of a micropipette according to claim 1, combining force sensing capabilities with the nanodelivery of materials to surfaces.

### 5. Brief Description of the Drawings

The objects, features and advantages of the present invention will be understood by those of skill in the art from the following detailed description thereof, taken with the accompanying drawings, in which:.
Figure 1 is a diagrammatic illustration of a tapered glass tube;
Figure 2 is a diagrammatic illustration of a tube tapered during a second tapering cycle;
Figure 3 illustrates a mechanism for coating a tapered optical fiber;
Figure 4a illustrates an optical fiber taper for force sensing application;
Figure 4b illustrates a micropipette taper for force sensing applications;
Figure 5 illustrates a cantilevered bent fiber tip;
Figure 6 illustrates a cantilevered pipette constructed in accordance with the invention;
Figure 7 illustrates a cantilevered pipette used for chemistry; and
Figure 8 illustrates a device for applying coating to structures.

### 6. Description of the Drawings

With pulling technology there are many parameters that can be adjusted to obtain the optimal profile. These are: 1. heat or temperature, 2. the geometric region that is heated, called the filament, 3.the velocity of the pulling that is measured as the glass softens and begins to separate under a constant load and this velocity is determined by the time of heating, 4. the delay between the start of the pulling and turning off the heating element and 5. the tension of the pulling. These can all be microprocessor controlled to develop a geometry in which the glass is first tapered to a dimensionality that is above the cut-off for the propagation of electromagnetic radiation in a metallic waveguide (Figure 2.1) and is then cooled before a second tapering cycle is entered in which a cone angle between 30-40° (Figure 2.2) is achieved by multiple pulling cycles. This geometry is shown in Figure 2. The number of these later cycles depends on the final outer diameter of the tip.

These parameters can be altered in order to tailor the devices for the chemical delivery of materials in nanodimensionalities and to optimize the probes for the dynamic movements of the surfaces of the sample initiated by some external stimulus such as light, sound, electricity etc.

### 5.1 Straight optical elements for maximum throughput of electromagnetic radiation

### 5.1.1 Tapered Optical Fibers

### 5.1.1.1 Pulling

The above pulling technology can be applied with the following parameters for straight optical fibers in order to get the maximum powers described in this patent.

For the first taper appropriate parameters would be:

| Heat | Filament | Velocity | Delay | Pulling |
|---|---|---|---|---|
| 250 | 3 | 80 | 250 | 10 |

For the second taper there is a series of three pulls for a 0.1 micron tip with parameters that could be:

| Heat | Filament | Velocity | Delay | Pulling |
|---|---|---|---|---|
| 250 | 0 | 7 | 150 | 10 |
| 250 | 0 | 10 | 150 | 60 |
| 290 | 0 | 15 | 126 | 100 |

### 5.1.1.2 Coating

The coating is accomplished with vacuum deposition of metal. One particular example is a thin chrome coating that is then overcoated with a thicker coating of aluminum. For straight elements this coating is accomplished with an angle of 70° between the normal of the optical element and a line drawn between the tip and the filament (see Figure 3). This angle, a, is crucial for the final dimension of the subwavelength aperture at the tip of this second region of taper. The larger the distance between the filament and the tip the more control of the accuracy of the dimension of the aperture. This occurs because the cotan a approaches the cos of this same angle.

### 5.1.1.3 Force Sensing Capabilities

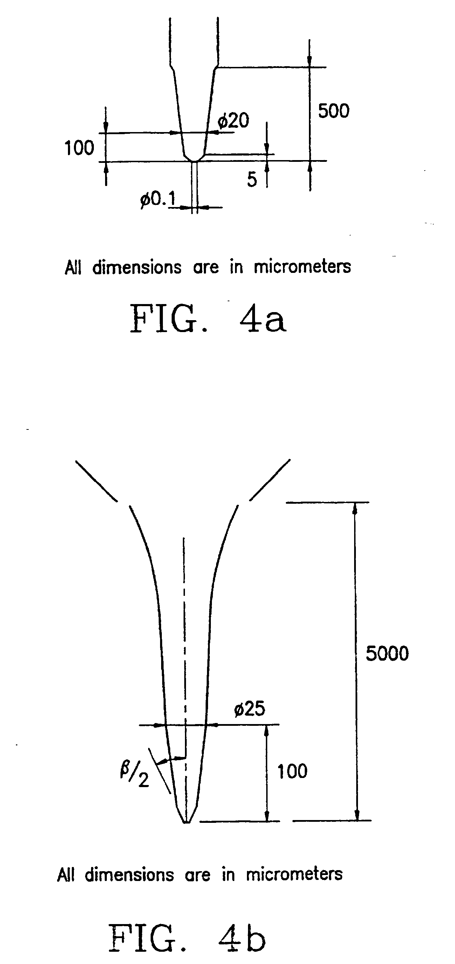

To optimize the force sensing capabilities of these tips the initial taper dimension is chosen to be approximately 20 microns in diameter for region of 100 microns length just above the second taper (see Figure 4 a). This is the region in straight fibers that the flexibility of the structure is monitored. This dimensionality controls the resonance frequency and this frequency, f, can be altered up to 500 kHz with a width of the resonance, Δf, that can be 0.75 kHz.

### 5.1.2 Tapered Micropipettes

### 5.1.2.1 Pulling

Unlike the etching methodologies, the same pulling technology can be also applied to micropipettes. Such micropipettes have important applications in guiding deep ultraviolet light where optical fibers are not effective. To obtain the optimal parameters we use the following protocol:

| Heat | Filament | Velocity | Delay | Pulling |
|---|---|---|---|---|
| 390 | 15 | 105 | 200 | 20 |

For the second taper there is a series of three pulls for a 0.1 micron tip with parameters that could be:

| Heat | Filament | Velocity | Delay | Pulling |
|---|---|---|---|---|
| 220 | 0 | 5 | 200 | 18 |
| 200 | 0 | 5 | 200 | 15 |
| 200 | 0 | 30 | 126 | 40 |

### 5.1.2.2 Coating

The coating is accomplished with vacuum deposition of metal. One particular example is a thin chrome coating that is then overcoated with a thicker coating of aluminum. For straight elements this coating is accomplished with an angle of 70° between the normal of the optical element and a line drawn between the tip and the filament (see Figure 3). This angle is crucial for the' final dimension of the subwavelength aperture at the tip of this second region of taper. The larger the distance between the filament and the tip the more control of the accuracy of the dimension of the aperture. This occurs because the cotan a approaches the cos of this same angle.

### 5.1.2.3 Force Sensing Capabilities

To optimize the force sensing capabilities of these tips the initial taper dimension is chosen to be approximately 25 microns in diameter for region of 100 microns length just above the second taper (see Figure 4 b). This is the region in straight tips that the flexibility of the structure is monitored. This dimensionality controls the resonance frequency and this frequency, f, can be altered up to 60 kHz with a width of the resonance, Δf, that can be 0.3 kHz.

### 5.1.3 Cantilevered Fibers

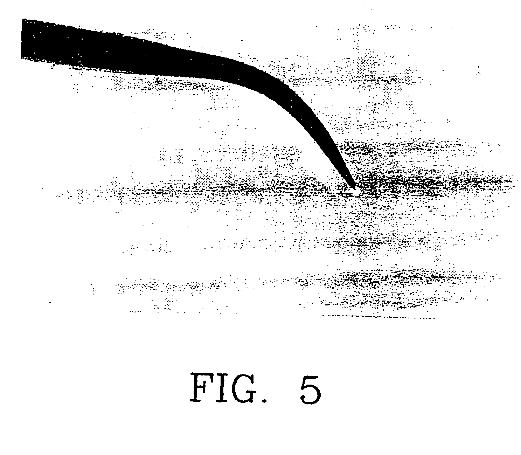

Fibers are bent at the tip according to the procedure that is described by K. Lieberman and A. Lewis, "A Method and a Device for Probe Microscopy" [PCT Application Serial Number PCT/US94/08691]. This bent fiber structure is seen in Figure 5. The angle of the bend in this structure is between 45-60°. The pulling, coating and the resulting resonance frequencies are the same except that the angle of the coating is 85°. In the case of these cantilevered elements such elements can be used for the dynamic sensing of surface movement initiated by an external stimulus such as light, sound, electricity etc.

### 5.1.4 Cantilevered Pipettes

The pulling and coating parameters are the same as described above for straight pipettes. However, during the bending operation as described in the Lieberman and Lewis patent application [PCT Application Serial Number PCT/US94/08691] care has to be taken not to block the hollow central core of the pipette. In the case of these cantilevered elements such elements can be used for the dynamic sensing of surface movement initiated by an external stimulus such as light, sound, electricity etc.

### 5.1.4.1 Cantilevered Pipettes For Light

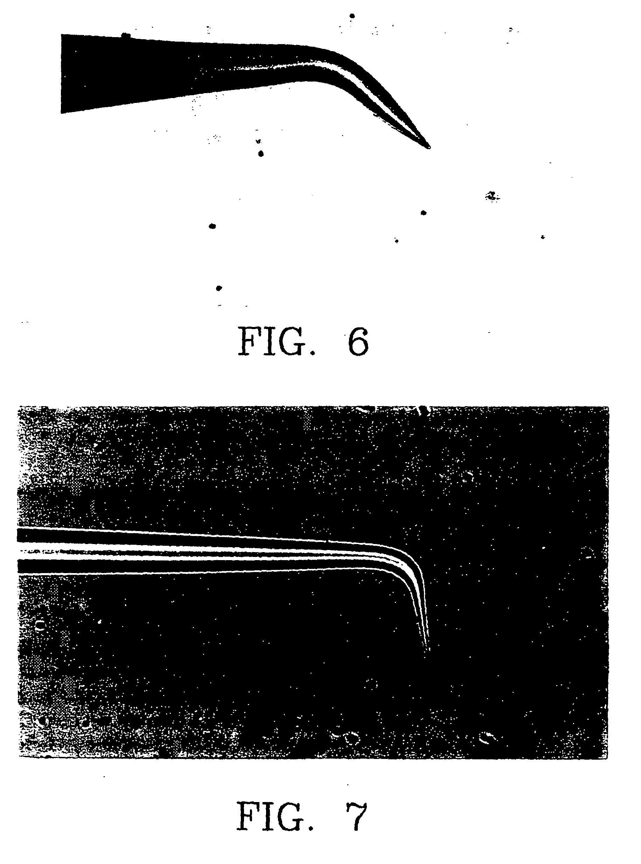

The structure that is obtained by these pulling parameters is shown in Figure 6. This geometric structure is similar in overall characteristics to what has been obtained with a bent fiber. However, the resonance frequencies that can be achieved for this structure are somewhat lower.

### 5.1.4.2 Cantilevered Pipettes For Chemistry

In this application a liquid or a gas is transmitted through the narrow opening at the tip of the cantilevered micropipette. Such an uncoated tapered micropipette with force sensing capabilities and a reflective coating only on the cantilever allows the tip to be brought into contact with a surface and this permits the delivery of nanoquantities of material onto the surface. This causes a chemical change on appropriately chosen surfaces if the nature of the chemical in the tip and the chemical in the surface are reactive one with the other.

In the case of a liquid, under one method of control of the liquid that exists, the tip is accomplished by pressure of the liquid column, by chemical manipulation of the hydrophillicity of the surface and the tip and by the nature of the tip geometry. Specifically on this last parameter the requirement is exactly opposite to what is required for the light funnels tips discussed above. When the surface is appropriately wet by the material in the tip the cone angle of the tip can be as small as 7°. This prevents spreading of the liquid column. Measured resonance frequencies of these structures have been measured at 200 kHz. Additional characteristics that are important in such tips is the need to have high resonance frequencies that will allow for intermittent contact operation and to effectively permit imposed resonances on the tip that will allow, in the case of a liquid chemical in the tip, for the column of liquid to be effectively and reproducibly broken. Another characteristic difference for chemicals exiting the tip that wet surfaces is the angle of the bend and this angle can reach 90° instead of the 60° that is more characteristic of the light funnels (Fig.7) . For other surfaces/tip chemical combinations other angles, tip geometries and resonance frequencies have to be chosen for the most appropriate writing with such tips. Also the force sensing capabilities are of importance in order to give the best sensitivity for measuring the chemical alterations on the surface that have occurred.

### 5.1.4.3 Cantilevered Tapered Micropipettes For Ion Conductance Microscopy

The pulling and coating parameters are similar to those that are described in the tips that are used for chemical delivery.

### 5.1.4.4 Cantilevered Tapered Micropipettes For Combined Ion Conductance and Optical Ion Sensing

The pulling and coating parameters are similar to those that are described in the tips that are used for nanodelivery of light since fibers are inserted to illuminate an ion sensing dye filled sol-gel tip from the inside of the micropipette. An additional characteristic is that the tip has to generate sufficient capillary forces to draw a sol-gel into the tip in which there is a dye which changes in optical characteristics with surrounding ion concentration. These sol-gels are conductive to liquid and can be used for both ion conductance and optical ion sensing. It is best that such structures that are to be used in optics are completely coated with metal as is the case in the optical funnels. Materials other than sol-gels can also be used to act as vessels for these dyes.

### 5.3 NanoSensing of Surface Dynamics

Optimization of the force sensing capabilities of the probes described above is achieved by modulating the dimension of the taper of the glass in the region where the flexibility of the structure is monitored and this results in a resonance that is controlled in frequency. By controlling this dimension the frequency, f, can be altered by up to 500 kHz with a width of the resonance, Δf, that can be 0.75 kHz. This allows for maximal response of the tips to dynamic movements of the surface and/or the maximal sensitivity of the tips for the application of non-contact protocols in measuring surface forces.

### 5.4 A Device for Appropriate Coating of the Structures Described Above

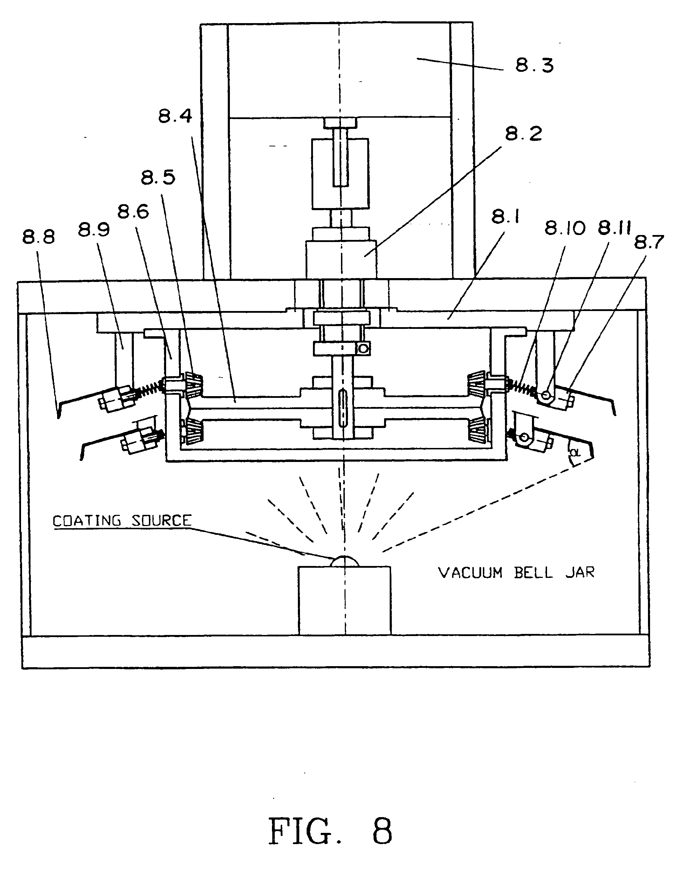

To achieve appropriate coatings a device was constructed as shown in Figure 8. This device is based on vacuum bell jar and consists of a base 8.1, rotating sealed shaft 8.2, electromotor 8.3, drive gear wheel 8.4 and set of driven gear wheels 8.5 that are mounted on the periphery of a cup 8.6. Rotating mounts 8.7 of tapered straight and/or cantilevered micropipettes and fibers 8.8 are mounted on pillars 8.9 and connected with driven wheel axles by flexible shafts 8.10.

The device operates as following: The motor 8.3 rotates shaft 8.2, which rotates wheel 8.4 and wheels 8.5. Furthermore, the rotary motion is transmitted on mounts 8.7 with fibers 8.8 by shafts 8.10. The angle of the tapered glass elements may be changed by a mount that can be raised and lowered and can turn around on the axle 8.11. So that the rotation of the tapered straight or cantilevered micropipette or fiber during the coating process provides uniformity of deposition, and its rotation provides the opportunity to prevent the coating of the tip itself.

### 6. Advantages Over Prior Art

Techniques are described in this patent that can produce high efficiency throughput of light through tapered glass structures with subwavelength apertures at the tip. Previously, all such attempts at producing such structures were based on etching with chemicals. We have achieved high throughputs by using a series of pulling protocols that permit very high efficiency transmission of light with excellent capabilities for all force sensing protocols. This has never been achieved before. The throughputs that we have achieved permit the generation of ultrasmall spots of light that could extend to below 20 nm with significant intensities of light in these tips. In addition with small amendations these structures can be altered for excellent delivery of nanoquantities of chemicals with nanometric control of chemistry using the force sensing capabilities of these structures and other uses such as combined force and ion sensing etc.

### 7. Applications

A variety of applications are envisioned in optics, electronics, chemistry, physics and biology. The structures that have been amended slightly to deliver nanoquantities of chemicals effectively can also be used in a variety of applications where nanometric control of chemistry is required.

## Claims

1. Use of a micropipette comprised of a tapered glass structure produced from a glass capillary by pulling technologies, the micropipette being bent near a tip to produce a cantilevered structure suitable for normal force sensing in a variety of attractive, repulsive, contact and non-contact modes, the micropipette having an aperture smaller than the wavelength of light, using the force sensing capability of the micropipette and delivering nanoquantities of liquid or gas chemicals for writing on a surface in a controlled fashion so that chemistry can be performed with nanometric control in order to prevent the spreading of the chemicals on the surface.

2. Use of a micropipette according to claim 1, wherein chemistry can be performed with nanometric control by pressure on a column of chemicals inside the tapered micropipette, by chemical manipulation of the hydrophillicity of the surface and of the tip, and by the nature of the tapered geometry of the tip and the angle of the cantilever relative to the tip.

3. Use of a micropipette according to claim 1 or 2, wherein the micropipette is also adjusted for maximum force sensitivity.

4. Use of a micropipette according to any of claims 1 to 3 wherein the force sensing capabilities of the probes are **characterized by** the dimension of the taper of the glass being appropriately chosen in the region where the flexibility of the structure is monitored to provide a resonance that is controlled in frequency and this frequency, f, can be altered by controlling this dimension up to 500 kHz with a width of the resonance, Δf that can be 0.75 kHz to provide for maximal response of the tips to dynamic movements of the surface and/or application of non-contact protocols in measuring surface forces.

5. Use of a micropipette according to any of claims 1 to 4 wherein the micropipette comprises a 0.1 micron tip.

6. Use of a micropipette according to any of claims 1 to 5 wherein the micropipette comprises an aperture smaller than the wavelength of deep ultraviolet light.

7. Use of a micropipette according to any of claims 1 to 6 wherein the tapered geometry comprises a cone angle of less than 30°.

8. Use of a micropipette according to any of claims 1 to 7, wherein the micropipette has resonance frequencies that will allow for intermittent contact operation and will effectively permit imposed resonances on the tip that will allow, in the case of a liquid chemical in the tip, for the column of liquid to be effectively and reproducibly broken.

## Patentansprüche

1. Verwendung einer Mikropipette bestehend aus einer konisch zulaufenden Glaskonstruktion, die durch Ziehtechniken aus einer Glaskapillare hergestellt worden ist, wobei die Mikropipette nahe an einer Spitze gebogen ist, um eine auskragende Konstruktion zu erzeugen, die für normale Kraftabtastung in einer Vielzahl von Anziehungs-, Abstoßungs-, Kontakt- und Nichtkontakt-Modi geeignet ist, wobei die Mikropipette eine Öffnung, die kleiner ist als die Wellenlänge von Licht, besitzt und die Kraftabtastungsfähigkeit der Mikropipette verwendet und Nanomengen an flüssigen oder gasförmigen Chemikalien abgibt, zum kontrollierten Schreiben auf einer Oberfläche, so dass der chemische Vorgang mit nanometrischer Kontrolle ausgeführt werden kann, um die Ausbreitung der Chemikalien auf der Oberfläche zu verhindern.

2. Verwendung einer Mikropipette nach Anspruch 1, wobei der chemische Vorgang mit nanometrischer Kontrolle durch Druck auf eine Chemikalien-Säule in der konisch zulaufenden Mikropipette durch chemische Manipulation der hydrophilen Eigenschaft der Oberfläche und der Spitze und durch die Art der konisch zulaufenden Geometrie der Spitze und den Winkel der Auskragung gegenüber der Spitze ausgeführt werden kann.

3. Verwendung einer Mikropipette nach Anspruch 1 oder 2, wobei die Mikropipette auch auf eine maximale Kraftempfindlichkeit eingestellt ist.

4. Verwendung einer Mikropipette nach einem der Ansprüche 1 bis 3, wobei die Kraftabtastungsfähigkeiten der Sonden **dadurch gekennzeichnet sind, dass** die Abmessung der Konizität des Glases in dem Bereich geeignet ausgewählt ist, in dem die Flexibilität der Konstruktion überwacht wird, um eine Resonanz zu liefern, deren Frequenz kontrolliert wird, und diese Frequenz f durch die Kontrolle dieser Abmessung bis zu 500 kHz mit einer Resonanzbreite Δf, die bis zu 0,75 kHz betragen kann, verändert werden kann, um für eine maximale Reaktion der Spitzen auf die dynamischen Bewegungen der Oberfläche und/oder die Anwendung von Nichtkontakt-Protokollen in der Messung von Oberflächenkräften zu sorgen.

5. Verwendung einer Mikropipette nach einem der Ansprüche 1 bis 4, wobei die Mikropipette eine Spitze von 0,1 Mikron besitzt.

6. Verwendung einer Mikropipette nach einem der Ansprüche 1 bis 5, wobei die Mikropipette eine Öffnung besitzt, die kleiner ist als die Wellenlänge von tiefultraviolettem Licht.

7. Verwendung einer Mikropipette nach einem der Ansprüche 1 bis 6, wobei die konisch zulaufende Geometrie einen Kegelwinkel von weniger als 30° aufweist.

8. Verwendung einer Mikropipette nach einem der Ansprüche 1 bis 7, wobei die Mikropipette Resonanzfrequenzen besitzt, die einen intermittierenden Kontaktbetrieb erlauben, und vorgeschriebene Resonanzen an der Spitze in wirksamer Weise zulassen, die es im Falle einer flüssigen Chemikalie in der Spitze ermöglichen, dass die Flüssigkeitssäule wirksam und reproduzierbar gebrochen wird.

## Revendications

1. Utilisation d'une micropipette constituée d'une structure conique en verre réalisée à partir d'un tube capillaire en verre grâce à des techniques de tirage, la micropipette étant incurvée près d'un embout afin de réaliser une structure en porte-à-faux adaptée à une détection de force normale dans une variété de modes de contact d'attraction, de répulsion ou de non contact, la micropipette présentant une ouverture inférieure à la longueur d'onde de la lumière, utilisant la capacité de détection de la force de la micropipette et délivrant des nano-quantités de produits chimiques liquides ou gazeux afin d'écrire sur une surface de manière contrôlée, de telle sorte que le traitement chimique puisse être effectué avec un contrôle nanométrique afin d'empêcher l'étalement des produits chimiques sur la surface.

2. Utilisation d'une micropipette selon la revendication 1, dans laquelle le traitement chimique peut être effectué avec un contrôle nanométrique grâce à une pression sur une colonne de produits chimiques à l'intérieur de la micropipette conique, grâce à une manipulation chimique du caractère hydrophile de la surface et de l'embout, et grâce à la nature de la géométrie conique de l'embout et de l'angle du porte-à-faux par rapport à l'embout.

3. Utilisation d'une micropipette selon l'une quelconque des revendications 1 ou 2, dans laquelle la micropipette est également réglée pour une sensibilité à la force maximale.

4. Utilisation d'une micropipette selon l'une quelconque des revendications 1 à 3, dans laquelle les capacités de détection de la force des sondes sont **caractérisées par le fait que** les dimensions du cône de verre sont choisies de manière appropriée dans la région où la flexibilité de la structure est surveillée afin de produire une résonance qui est contrôlée en fréquence et afin que cette fréquence, f, puisse être modifiée en contrôlant cette dimension jusqu'à 500 kHz, avec une largeur de la résonance, Δf, qui peut être de 0,75 kHz afin de fournir une réponse maximale des embouts aux mouvements dynamiques de la surface et/ou l'application de protocoles de non-contact lors de la mesure des forces de surface.

5. Utilisation d'une micropipette selon l'une quelconque des revendications 1 à 4, dans laquelle la micropipette comprend un embout de 0,1 micron.

6. Utilisation d'une micropipette selon l'une quelconque des revendications 1 à 5, dans laquelle la micropipette comprend une ouverture inférieure à la longueur d'onde d'une lumière ultraviolette pénétrante.

7. Utilisation d'une micropipette selon l'une quelconque des revendications 1 à 6, dans laquelle la géométrie conique comprend un angle de cône inférieur à 30°.

8. Utilisation d'une micropipette selon l'une quelconque des revendications 1 à 7, dans laquelle la micropipette a des fréquences de résonance qui permettront le fonctionnement avec un contact intermittent et qui permettront effectivement des résonances imposées sur l'embout, ce qui permettra, dans le cas où un produit chimique liquide est présent dans l'embout, que la colonne de liquide soit brisée de manière efficace et reproductible.
